(19) Europäisches Patentamt
European Patent Office
Office européen des brevets

(11) Veröffentlichungsnummer: 0 177 978
B1

(12) # EUROPÄISCHE PATENTSCHRIFT

(45) Veröffentlichungstag der Patentschrift: **20.04.88**

(51) Int. Cl.[4]: **C 07 C 143/58**, C 07 C 143/66, C 07 C 143/55

(21) Anmeldenummer: **85113502.0**

(22) Anmeldetag: **10.06.83**

(60) Veröffentlichungsnummer der früheren Anmeldung nach Art. 76 EPÜ: **0097289**

(54) **Naphtolamin-Derivate.**

(30) Priorität: **22.06.82 DE 3223257**
**22.06.82 DE 3223255**

(43) Veröffentlichungstag der Anmeldung: **16.04.86 Patentblatt 86/16**

(45) Bekanntmachung des Hinweises auf die Patenterteilung: **20.04.88 Patentblatt 88/16**

(84) Benannte Vertragsstaaten: **CH DE FR GB LI**

(56) Entgegenhaltungen:
**CS - A - 155 758**
**US - A - 2 347 042**

**HELVETICA CHIMICA ACTA, Band 65, Heft 2, Nr. 53, 1982 Seiten 546-550 Schweizerische Chemische Ges. BASEL (CH) A. COURTIN: "Zur Synthese sulfonierter Derivate von 4-Fluoranilin"**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**
Erfinder: **Klauke, Erich, Dr., Eichendorffweg 8, D-5068 Odenthal (DE)**

EP 0 177 978 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Naphtholamin-Derivate der Formel

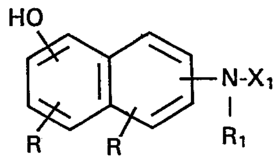

(1a)

worin
R = H oder $SO_3H$
$R_1$ = H oder $C_1$-$C_4$-Alkyl

$X_1$ = 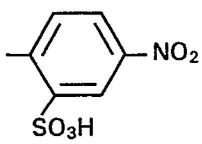 oder 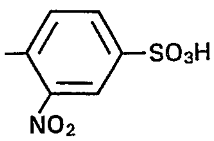

bezeichnen.

$R_1$ steht in Formel (1a) bevorzugt für Wasserstoff.

Im Rahmen der Formel (1a) bevorzugte Verbindungen entsprechen den Formeln

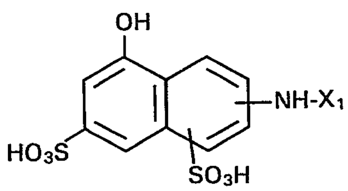

(1b)

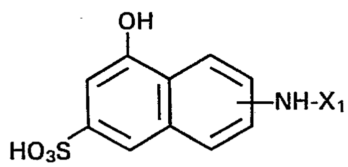

(1c)

Die Verbindungen der Formel (1a) werden hergestellt, indem man Amino-hydroxynaphthaline der Formel

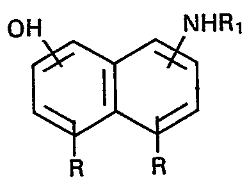

(1d)

mit Fluornitrobenzolsulfosäuren der Formel

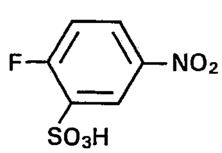

(1e)

oder

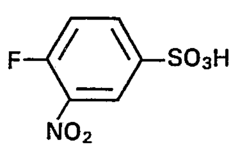

(1f)

kondensiert.

Diese Kondensation erfolgt im allgemeinen in wässriger Phase bei Temperaturen zwischen 60 und 120°C, bevorzugt zwischen 80 und 100°C, wobei der bei der Kondensation freiwerdende Fluorwasserstoff zweckmässigerweise durch Zusatz von Basen wie z.B. wie z.B. LiOH, $Li_2CO_3$, NaOH, $NaHCO_3$, KOH, $K_2CO_3$, CaO, $Ca(OH)_2$, $CaCO_3$, MgO, $MgCO_3$, $K_2HPO_4$, $K_3PO_4$, $Na_2HPO_4$, $Na_3PO_4$, $Na(CH_3COO)$, $K(CH_3COO)$ gebunden wird.

Pro Mol Ausgangsverbindung der Formel (1d) werden 1 bis 1,1 Mol und vorzugsweise 1 Mol der Komponenten (1e) oder (1f) eingesetzt.

Beispiele für die Formel (1a) wiedergegebenen Verbindungen sind folgende:

1-Hydroxy-8-(2'-nitro-4'-sulfophenylamino)-naphthalin-3,6- oder -3,5-disulfonsäure,
1-Hydroxy-8-(2'-sulfo-4'-nitrophenylamino)-naphthalin-3,6- oder 3,5-disulfonsäure,
1-Hydroxy-7-(2'-nitro-4'-sulfophenylamino)-naphthalin-3-sulfonsäure,
1-Hydroxy-7-(2'-sulfo-4'-nitrophenylamino)-naphthalin-3-sulfonsäure,
1-Hydroxy-6-(2'-nitro-4'-sulfophenylamino)-naphthalin-3-sulfonsäure,
1-Hydroxy-6-(2'-sulfo-4'-nitrophenylamino)-naphthalin-3-sulfonsäure,
1-Hydroxy-6-(2'-nitro-4'-sulfophenylamino)-naphthalin-4,8-disulfonsäure,
1-Hydroxy-6-(2'-sulfo-4'-nitrophenylamino)-naphthalin-4,8-disulfonsäure,
1-Hydroxy-5-(2'-nitro-4'-sulfophenylamino)-naphthalin-3-sulfonsäure,
1-Hydroxy-5-(4'-nitro-2'-sulfophenylamino)-naphthalin-3-sulfonsäure,
2-Hydroxy-6-(2'-nitro-4'-sulfophenylamino)-naphthalin-4-sulfonsäure,
2-Hydroxy-6-(2'-sulfo-4'-nitrophenylamino)-naphthalin-4-sulfonsäure,
2-Hydroxy-8-(2'-sulfo-4'-nitrophenylamino)-naphthalin,
1-Hydroxy-8-(2'-nitro-4'-sulfophenylamino)-naphthalin-3-sulfonsäure,
1-Hydroxy-8-(2'-sulfo-4'-nitrophenylamino)-naphthalin-3-sulfonsäure,
1-Hydroxy-7-(2'-nitro-4'-sulfophenylamino)-naphthalin-4-sulfonsäure,
1-Hydroxy-7-(2'-sulfo-4'-nitrophenylamino)-naphthalin-4-sulfonsäure,
1-Hydroxy-6-N-methyl-(2'-nitro-4'-sulfophenyl-amino)-naphthalin-3-sulfonsäure.

2-Fluor-5-nitrobenzolsulfonsäure der Formel (1e) erhält man durch Behandlung von 4-Fluornitrobenzol mit Oleum bei erhöhter Temperatur vorzugsweise bei 60-120°C, insbesondere bei 80-100°C. Hierbei werden pro Mol 4-Fluornitrobenzol 1 bis 1,6 Mol $SO_3$ insbesondere 1,2 bis 1,4 Mol $SO_3$ eingesetzt.

Die erfindungsgemässen Verbindungen der Formel (1a) sind wertvolle Zwischenprodukte für die Herstellung von wertvollen Azofarbstoffen, z.B. von Azofarbstoffen der Formel (1) sowie von Metallkomplexen der Azofarbstoffe (1),

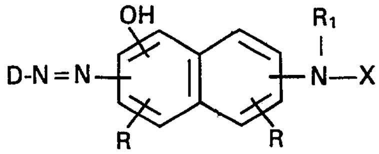

(1)

wobei die Reste D-N=N und -OH in ortho-Stellung zueinander stehen.

Für Formel (1) gilt:

D = aromatisch carbocyclischer oder aromatisch heterocyclischer Rest,

R = H oder $SO_3H$

$R_1$ = H oder $C_1$-$C_4$-Alkyl

X = 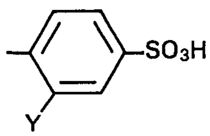 oder 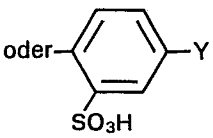

wobei

Y = $-NO_2$, $-NH_2$ oder -NH-Z

Z = faserreaktiver Rest oder nichtfaserreaktiver Carbonyl- oder Sulfonylrest,

D = ist vorzugsweise der Rest einer gegebenenfalls Azogruppen enthaltenden Diazokomponente der Benzol- oder Naphthalinreihe,

Z = steht vorzugsweise für einen faserreaktiven Rest, $Z_1$.

Der Rest D kann weitere Substituenten enthalten: als Beispiel seien genannt:

$C_1$-$C_4$-Alkyl, $C_1$-$C_4$-Alkoxy, Rest der Formel

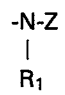

worin $R_1$ und Z die angegebene Bedeutung haben, Aminogruppen wie $NH_2$, $CH_3NH$, $C_2H_5NH$,

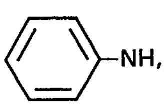, 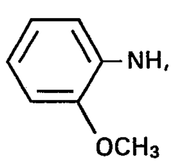,

die Ureido-, Hydroxy-, Nitro-, Cyan- und Carboxygruppe, Sulfonamidreste wie $SO_2NH_2$, $SO_2NHCH_3$, $SO_2N(CH_3)_2$, die Carbonamidreste wie z.B. $CONH_2$, $CONHCH_3$, $CONHC_2H_5$, Alkylsulfonylreste wie z.B. $SO_2CH_3$, $SO_2C_2H_5$, $SO_2$-$CH_2$-$CH=CH_2$, $SO_2$-$CH=$ $=CH$-$CH_3$, $SO_2$-$CH_2$-$CH_2OH$, $SO_2$-$CH_2CH_2O$-$SO_3H$, die Arylsulfonylreste wie z.B.

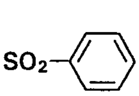, 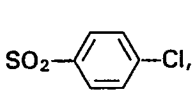, 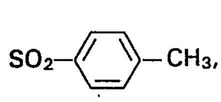,

Halogen wie z.B. Fluor, Chlor oder Brom. Insbesondere enthält der Rest D Sulfonsäuregruppen als Substituenten.

Falls der Rest D komplexbildende Gruppen enthält, wie Hydroxy und Carboxy, kommen auch die Schwermetallkomplexe der Farbstoffe der Formel (1) in Betracht.

Zur Komplexbildung geeignete Schwermetalle sind: Cu, Ni, Fe, CO und Cr.

Als Beispiele für nicht faserreaktive Carbonyl- oder Sulfonylreste Z seien erwähnt:

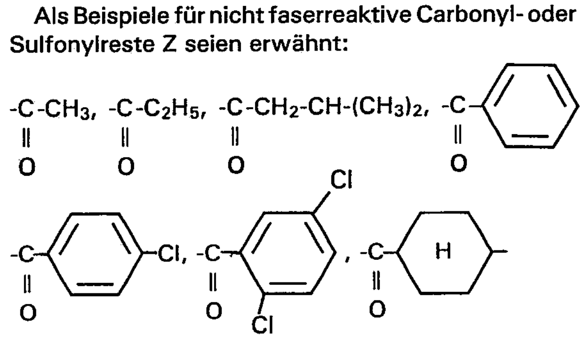

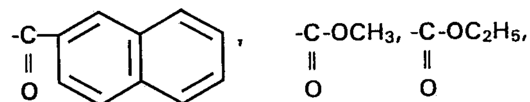

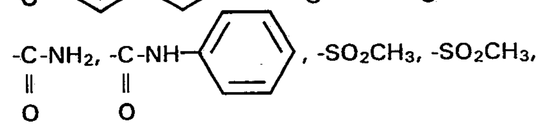

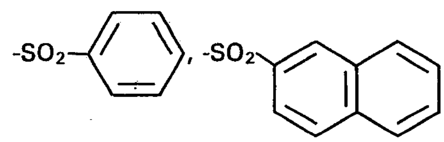

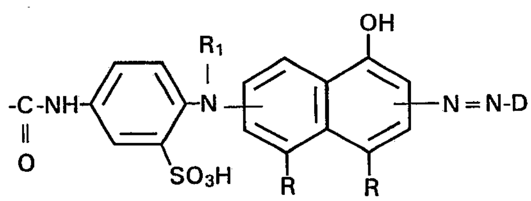

Unter faserreaktiven Resten $Z_1$ werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in grosser Zahl bekannt.

*Beispiel 1*

72,4 g des Farbstoffs der Formel

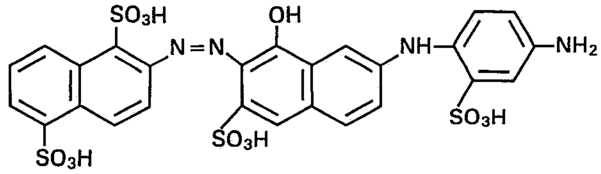

werden in 1 l Wasser gelöst. Bei 15-20°C tropft man 16,9 g 2,4,6-Trifluor-5-chlor-pyrimidin ein und hält durch gleichzeitige Zugabe von verdünnter Natronlauge einen pH von 6-6,5 ein. Nach beendeter Acylierung wird der Farbstoff mit 5 Vol.-% Kochsalz abgeschieden, abgesaugt, getrocknet und gemahlen. Es resultiert ein dunkelbraunes Farbstoffpulver, das sich leicht mit brauner Farbe in Wasser löst. In Form der freien Säure entspricht der Farbstoff der Formel

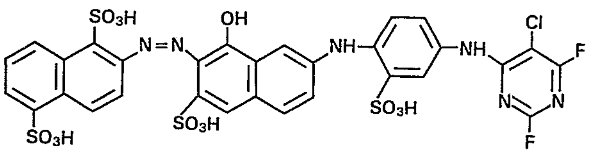

Nach einem der für Reaktivfarbstoffe üblichen Verfahren erhält man damit auf Baumwolle kräftige dunkelbraune Färbungen (hue number 32).

Der Ausgangsfarbstoff wird erhalten durch Kupplung von diazotierter 2-Aminonaphthalin-1,5-disulfonsäure auf 1-Hydroxy-7-(2'-sulfo-4'-nitrophenylamino)-naphthalin-3-sulfonsäure im neutralen bis schwach alkalischen Medium und anschliessende Reduktion der Nitro- zur Aminogruppe mit $Na_2S$.

Verwendet man anstelle von 2,4,6-Trifluor-5-chlor-pyrimidin eine äquivalente Menge der nachfolgend aufgeführten Reaktivkomponenten, so erhält man gleichfalls wertvolle Reaktivfarbstoffe, die Baumwolle dunkelbraun färben. Der Farbe nach Colour-Index-Hue Indication Chart beträgt Hue Nr. 32.

*Tabelle 1*

*Reaktivkomponente*

2,4-Difluor-5-chlor-6-methyl-pyrimidin
5-Chlor-2,4,6-trifluorisophthalonitril
2,4,6-Trifluor-1,3,5-tricyanobenzol
2,4,5,6-Tetrafluorisophthalonitril
2,4,6-Trichlor-5-methylsulfonyl-pyrimidin
2,4,6-Trichlor-5-ethylsulfonyl-pyrimidin
2,4-Difluor-5-methylsulfonyl-6-(2'-sulfophenylamino)-pyrimidin
2,4,5,6-Tetrachlor-pyrimidin
2-Methylsulfonyl-4,5-dichlor-6-methyl-pyrimidin
2-Amino-4,6-difluor-triazin
2-Methylamino-4,6-difluortriazin
2-Phenylamino-4,6-difluortriazin
2-(2'-Sulfophenylamino)-4,6-difluor-triazin
2-(3'-Sulfophenylamino)-4,6-difluor-triazin
2-(4'-Sulfophenylamino)-4,6-difluor-triazin
2-(2'-Methyl-5'-sulfophenyl-amino)-4,6-difluortriazin
2-(2'-Chlor-4'-sulfophenyl)-amino-4,6-difluortriazin
2-(6'-Sulfonaphthyl-2'-amino)-4,6-difluortriazin
2-Methoxyethoxy-4,6-difluor-triazin
2-Amino-4,6-dichlor-triazin
2-Methylamino-4,6-dichlor-triazin
2-Phenylamino-4,6-dichlor-triazin
2-(3'-Sulfophenylamino)-4,6-dichlortriazin
2-(4'-Sulfophenylamino)-4,6-dichlortriazin
(2'-Methyl-5'-sulfophenylamino)-4,6-dichlortriazin
2-N-Methylphenylamino-4,6-dichlortriazin
2,3-Dichlorchinoxalin-6-carbonsäurechlorid
2,4,6-Trifluor-5-pyrimidin
2,4-Difluor-5,6-dichlor-pyrimidin.

Wenn man nach den Angaben des Beispiels 1 verfährt, jedoch anstelle der dort verwendeten Aminoazofarbstoffe diejenigen einsetzt, die man durch Kupplung der diazotierten Amine, die in Spalte 1 genannt sind, mit den in Spalte 2 aufgeführten Verbindungen im neutralen bis schwach alkalischen Bereich und anschliessende $Na_2S$-Reduktion der Nitrogruppe erhält, und als Reaktivkomponente die in Tabelle 1 und im Beispiel 1 genannten Verbindungen verwendet, so resultieren gleichfalls wertvolle Reaktivfarbstoffe, die Baumwolle in den in Spalte 3 genannten Tönen färben. Angegeben wird hierbei und in den Beispielen jeweils die Farbtonangabe nach Colour Index Hue Indication Chart (Hue number).

Tabelle 2

| Amine | Kupplungskomponente | Farbton | (hue number) |
|---|---|---|---|
| O-Sulfanilsäure | 1-Hydroxy-7-(2'-sulfo-4'-nitrophenylamino)-naphthalin-3-sulfonsäure (reduziert) | braun | 32 |
| Anilin | » | rotstichig braun | 26 |
| Anilin-2,5-disulfonsäure | » | braun | 32 |
| 1-Amino-4-methoxy-benzol-2,5-disulfonsäure | » | rotstichig braun | 26 |
| 1-Amino-4-methoxy-benzol-2-sulfonsäure | » | rotstichig braun | 26 |
| 2-Amino-naphthalin-1-sulfonsäure | » | rotstichig braun | 26 |
| 2-Amino-naphthalin-3,6,8-trisulfonsäure | » | rotstichig braun | 26 |
| o-Sulfanilsäure | 1-Hydroxy-7-(2'-nitro-4'-sulfophenylamino)-naphthalin-3-sulfonsäure (reduziert) | bordeaux | 34 |
| o-Sulfanilsäure | 1-Hydroxy-6-(2'-sulfo-4'-nitrophenylamino)-naphthalin-3-sulfonsäure (reduziert) | rotstichig violett | 35 |

*Beispiel 2*

Die aus 30,3 g 2-Amino-naphthalin-1,5-disulfonsäure bereitete Diazoverbindung wird zu einer Anschlämmung von 55,9 g 1-Hydroxy-7-[2'-sulfo-4'-(2'',4''-difluor-5''-chlorpyrimidinyl-6''-amino)-phenylamino]-naphthalin-3-sulfonsäure in 500 ml Wasser und 28 g Natriumhydrogencarbonat gegeben. Nach beendeter Kupplung wird der Farbstoff ausgesalzen. Nach dem Absaugen, Trocknen und Mahlen erhält man ein dunkelbraunes Farbstoffpulver. Der Farbstoff ist identisch mit dem Farbstoff des Beispiels 1.

*Beispiel 3*

Die aus 33,7 g 2-Amino-4-(2',4'-difluor-5'-chlor-pyrimidinyl-6'-amino)-benzol-1-sulfonsäure erhaltene Diazoverbindung wird zu einer Lösung von 44 g 7-Hydroxy-6-(2'-nitro-4'-sulfophenyl-amino)-naphthalin-3-sulfonsäure mit 28 g Natriumhydrogencarbonat in 1 Liter Wasser gegeben. Nach beendeter Kupplung wird der Farbstoff ausgesalzen, abgesaugt, getrocknet und gemahlen. Man erhält ein gelbes Pulver, das sich leicht in Wasser orangefarbig löst. Der Farbstoff der Formel

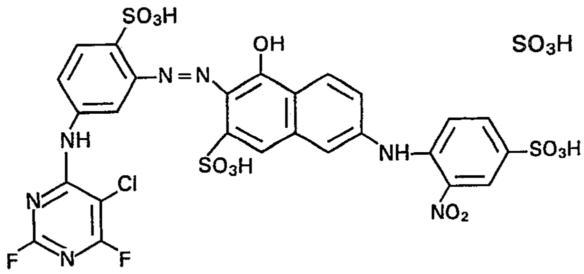

färbt Baumwolle nach einem der für Reaktivfarbstoffe gängigen Verfahren in einem brillantem gelbstichigen Orange (hue number 4).

Verfährt man nach den Angaben dieses Beispiels unter Verwendung der nachfolgenden aufgeführten Diazo- (Spalte 1) und Kupplungskomponenten (Spalte 2), so erhält man gleichfalls wertvolle Farbstoffe, die Baumwolle in den in Spalte 3 genannten Tönen färben.

Tabelle 3

| Amine | Kupplungskomponente | Farbton | (hue number) |
|---|---|---|---|
| 2-Amino-5-(2',4'-difluor-5'-chlor-pyrimidinyl-6'-amino)-benzol-1-sulfonsäure | 1-Hydroxy-6-(2'-nitro-4'-sulfo-phenylamino)-naphthalin-3-sulfonsäure | gelbstichig rot | 6 |
| » | 1-Hydroxy-6-(2'-sulfo-4'-nitro-phenylamino)-naphthalin-3-sulfonsäure | gelbstichig rot | 6 |
| » | 1-Hydroxy-7-(2'-nitro-4'-sulfo-phenylamino)-naphthalin-3-sulfonsäure | blaustichig rot | 9 |
| 2-Amino-5-(2',4'-difluor-5'-chlor-pyrimidinyl-6')-amino-methyl-naphthalin-1-sulfonsäure | 1-Hydroxy-6-(2'-nitro-4'-sulfo-phenylamino)-naphthalin-3-sulfonsäure | rotstichig orange | |

*Beispiel 4*

51,4 g des Farbstoffs der Formel

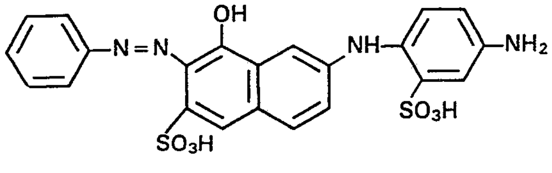

(erhältlich durch Kupplung von diazotiertem Anilin auf 1-Hydroxy-7-(2'-sulfo-4'-nitrophenylamino)-naphthalin-3-sulfonsäure und anschliessende $Na_2S$-Reduktion) werden in 1 Liter Wasser gelöst. Man kühlt auf 0-5 °C ab und leitet Phosgen ein, wobei man den pH durch gleichzeitige Zugabe von Natronlauge zwischen 6 und 7 hält. Nach beendeter Phosgenierung wird der Farbstoff ausgesalzen, abgesaugt, getrocknet und gemahlen. Man erhält ein dunkelbraunes Farbstoffpulver, das sich leicht in Wasser mit brauner Farbe löst.

Der Farbstoff der Formel

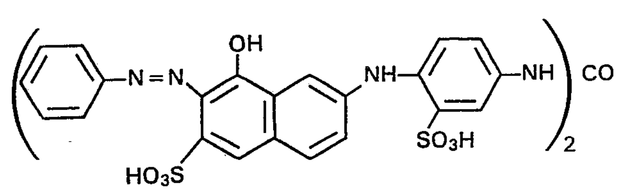

färbt Baumwolle nach einem der für Direktfarbstoffe üblichen Verfahren in braunen Tönen (hue number 26).

*Beispiel 5*

111,6 g des Farbstoffs der Formel

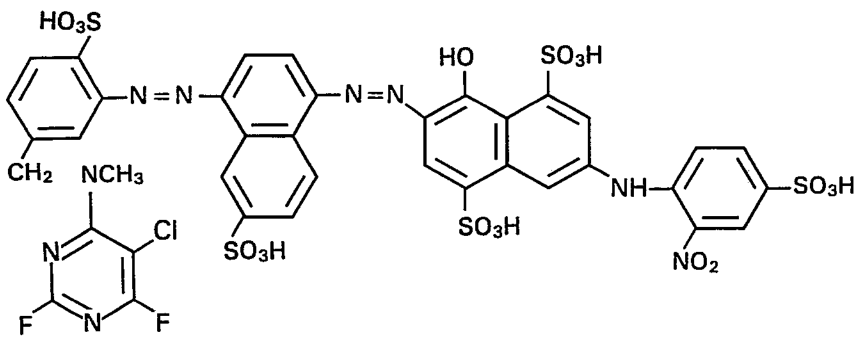

(er wird erhalten durch Acylieren von 2-Amino-4-N-methyl-aminomethyl-benzol-1-sulfonsäure mit 2,4,6-Trifluor-5-chlor-pyrimidin, Diazotieren des Kondensationsproduktes und Kupplung mit 1-Amino-6-sulfo-naphthalin im schwach sauren Medium, Diazotieren des Monoazofarbstoffs und Kupplung im bicarbonatalkalischen Medium auf 1-Hydroxy-6-(2'-nitro-4'-sulfophenylamino)-naphthalin-4,8-disulfonsäure) werden in 1 Liter Wasser gelöst. Man gibt 28 g $CuSO_4 \cdot 5H_2O$ und 52 g $Na(CH_3COO) \cdot 3H_2O$ zu und tropft dann 200 ml einer 5%igen $H_2O_2$-Lösung ein. Der Farbton der Lösung schlägt dabei von blau nach grün um. Nach beendeter oxydativer Kupferung wird der Farbstoff ausgesalzen, abgesaugt, getrocknet und gemahlen. Das dunkelgrüne Farbstoffpulver löst sich leicht in Wasser mit grüner Farbe. Der Farbstoff der Formel

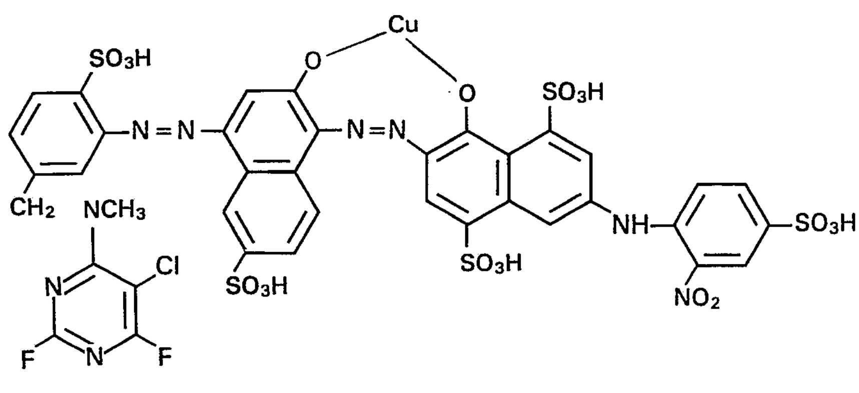

färbt Baumwolle nach einem der für Reaktivfarbstoffe gängigen Verfahren in blaustichig grünen Tönen (hue number 40).

*Beispiel 6*

239 g 1-Hydroxy-7-amino-naphthalin-3-sulfonsäure werden in 0,5 Liter Wasser mit 60 ml conc. Natronlauge auf pH 6 gestellt. Man gibt dann 259,1 g 2-Fluor-5-nitro-benzolsulfonsaures Kalium zu, wärmt auf 100°C und tropft 15%ige Sodalösung in dem Masse ein, dass der pH zwischen 5,5 und 6,5 liegt. Nach beendeter Kondensation wird die stark gelbgefärbte Lösung mit dem gleichen Volumen einer gesättigten Natriumchlorid-Lösung versetzt. nach dem Abkühlen saugt man ab. Die Verbindung der Formel

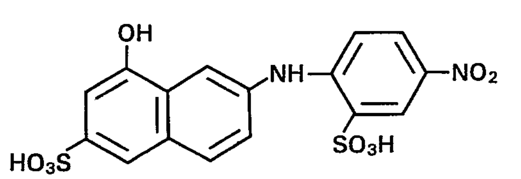

(liegt als neutrales Alkalisalz vor) löst sich leicht in Wasser mit gelber Farbe. Der Kupplungswert (Kupplung mit diazotischem Anilin im sodaalkalischen Medium) ergibt eine Ausbeute von 95%. Die Elementaranalyse führt zu einem Atomverhältnis von C:N:S wie 8:1:1 (Theorie 8:1:1).

$R_f$-Wert: 0,36

Laufmittel: Dimethylformamid/Diethylamin/5n Ammoniak/Methylethylketon im Volumenverhältnis 75/120/120/600

DC-Platte: Aluminium-Folie, Kieselgel 60 F 254 (Merck)

λ max: ausserhalb des sichtbaren Bereiches.

*Beispiel 7*

239 g 1-Hydroxy-7-amino-naphthalin-3-sulfonsäure werden in 0,5 Liter Wasser mit 60 ml conc. Natronlauge (d = 1,5) auf pH 6 gestellt. Man gibt dann 259,1 g 3-Nitro-4-fluor-benzolsulfonsaures Kalium zu, erwärmt auf 80°C und tropft 15%ige Sodalösung in dem Masse ein, dass der pH zwischen 5,5 und 6,5

liegt. Nach beendeter Kondensation wird die tief gelb gefärbte Lösung mit dem gleichen Volumen an gesättigter Kochsalzlösung versetzt. Nach dem Abkühlen auf Raumtemperatur saugt man ab.

Die Verbindung der Formel

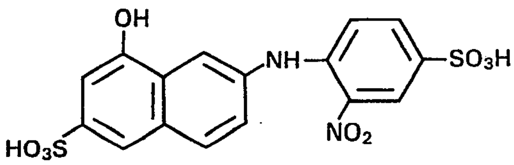

(liegt als neutrales Alkalisalz vor) löst sich leicht in Wasser mit gelber Farbe.

Ausbeute: 96% nach Kupplungswert.

Atomverhältnis C:N:S wie 8:1:1

$R_f$-Wert: 0,26

λ max: 430 nm

In der gleichen Weise wie in Beispiel 6 und 7 beschrieben erhält man die nachfolgenden Verbindungen:

| | $R_f$ | $\lambda_{max}$ |
|---|---|---|
| 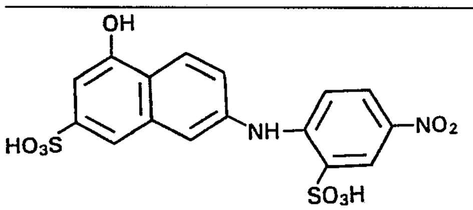 | 0,33 | ausserhalb des sichtbaren Bereiches |
| 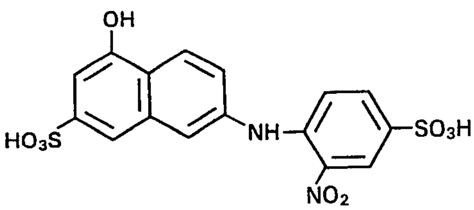 | 0,25 | 430 nm |
| 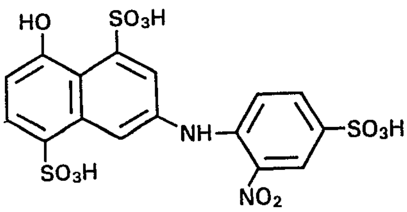 | 0,35 | 420 nm |
| 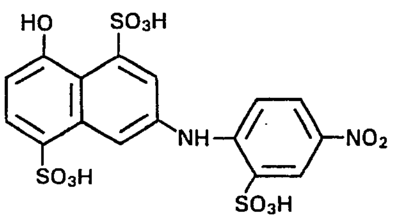 | 0,51 | ausserhalb des sichtbaren Bereiches |
| 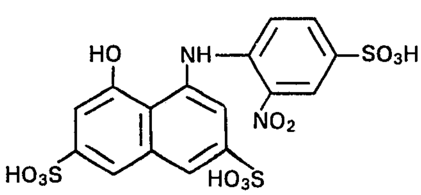 | 0,11 | 440 nm |
| 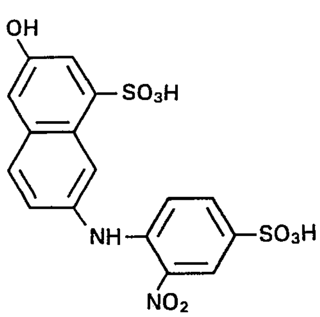 | 0,30 | 430 nm |

*Beispiel 8*

In 250 ml Monohydrat (= 100%ige Schwefelsäure) trägt man 423 g 4-Fluor-nitrobenzol ein und tropft dann 250 ml 65%iges Oleum ein. Man erwärmt dann im Laufe von 2 Stunden auf 100°C und hält solange diese Temperatur, bis eine mit Wasser versetzte Probe keine öligen Tropfen des Ausgangsmaterials mehr ausscheidet. Nach dem Abkühlen trägt man die Sulfierungsschmelze auf soviel Eis aus, dass die Temperatur nicht über 20°C steigt. Zu Abscheidung des Reaktionsproduktes setzt man 15 Volumenprozent Kaliumchlorid zu und saugt nach einstündigem Rühren ab. Der farblose Niederschlag wird erneut in 1 Liter Wasser angerührt und mit Kalilauge neutralisiert. Nach dem Absaugen erhält man 950 g wasserfeuchte Paste. Die Bestimmung der Ausbeute durch Zinkstaubreduktion der Nitrogruppe ergibt 84%.

Die Struktur des 2-Fluor-5-nitro-benzolsulfonsauren Kaliums wird durch das 1H-NMR-Spektrum ([$D_6$]-DMSO; 80 MHz) belegt.

Das Proton an C-3 absorbiert als Triplett bei 7.50 ppm, wobei die H,H-ortho- und die F,H-ortho-Kopplungskonstanten mit J = 9,0 Hz gleich gross sind. Das Proton an C-4 absorbiert mit 8 Linien (d/d/d) um 8,32 ppm, dasjenige an C-6 mit 4 Linien (d/d) bei 8,55 ppm.

**Patentansprüche**

1. Verbindungen der Formel

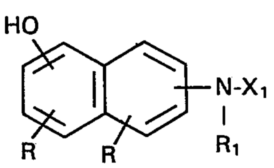

(1a)

in der
R = H oder $SO_3H$
$R_1$ = H oder $C_1$-$C_4$-Alkyl und

$X_1$ = 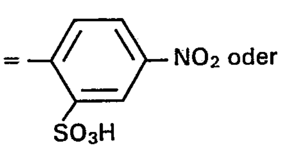 oder 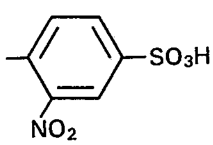

bezeichnen.

2. Verbindungen gemäss Anspruch 1, bei denen $R_1$ für H steht.

3. Verbindungen gemäss Anspruch 1 der Formel

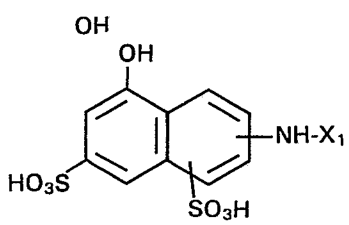

(1b)

4. Verbindungen gemäss Anspruch 1 der Formel

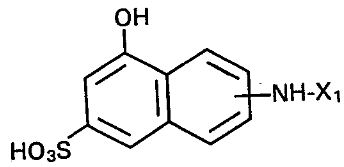

(1c)

5. Verbindung der Formel

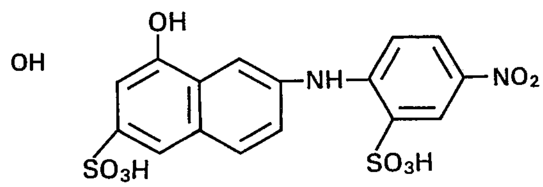

**Claims**

1. Compounds of the formula

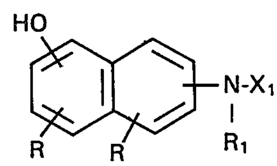

(1a)

wherein
R denotes H or $SO_3H$
$R_1$ denotes H or $C_1$-$C_4$-alkyl and

X denotes

$X_1$ = 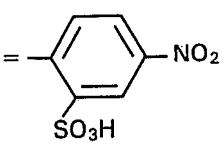 or 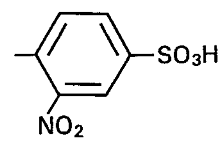

2. Compounds according to claim 1, in which $R_1$ represents H.

3. Compounds according to claim 1, of the formula

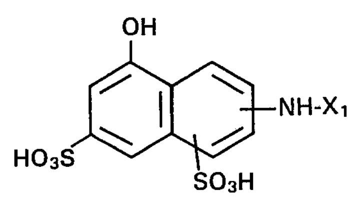

(1b)

4. Compounds according to claim 1, of the formula

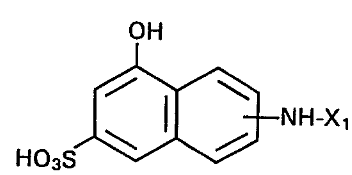

(1c)

5. Compound of the formula

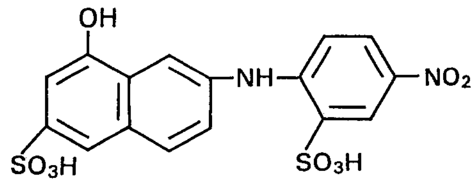

**Revendications**

1. Composés de formule

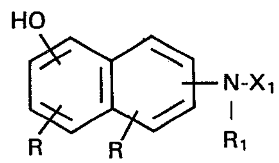

(1a)

dans laquelle

R = représente H ou $SO_3H$

$R_1$ représente H ou un groupe alkyle en $C_1$ à $C_4$ et

$X_1$ représente

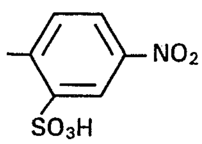 ou 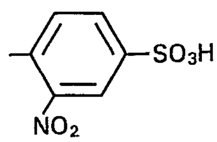

2. Composés suivant la revendication 1, dans lesquels $R_1$ représente H.

3. Composés suivant la revendication 1, de formule

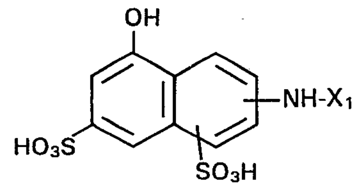

(1b)

4. Composés suivant la revendication 1, de formule

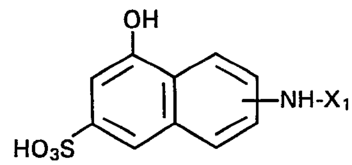

(1c)

5. Composé de formule